# EUROPEAN PATENT SPECIFICATION

(11) **EP 3 855 383 B1**
(45) Date of publication and mention of the grant of the patent: **19.11.2025**
(21) Application number: 19862376.1
(22) Date of filing: 23.09.2019
(51) Int. Cl.: G06Q 30/06, G06Q 30/00

(54) **SYSTEM AND METHOD FOR PRODUCING AND TRADING ARTWORKS EMBEDDED WITH ARTIFICIAL NUCLEIC ACID SEQUENCES**
SYSTEM UND VERFAHREN ZUM HERSTELLEN UND HANDELN VON KUNSTWERKEN, DIE MIT KÜNSTLICHEN NUKLEINSÄURESEQUENZEN EINGEBETTET SIND
SYSTÈME ET PROCÉDÉ DE PRODUCTION ET DE TRANSACTION D'OEUVRES D'ART DANS LESQUELLES SONT INTÉGRÉES DES SÉQUENCES D'ACIDES NUCLÉIQUES ARTIFICIELLES

(30) Priority: 21.09.2018 KR 20180113689
(43) Date of publication of application: 28.07.2021
(73) Proprietor: Lee, Yun Kyung, Goyang-si, Gyeonggi-do 10416 (KR)
(72) Inventor: LEE, Yoo Jin, Goyang-si Gyeonggi-do 10416 (KR); LEE, Yeong Woo, Goyang-si Gyeonggi-do 10416 (KR); LEE, Yun Kyung, Goyang-si Gyeonggi-do 10416 (KR)
(74) Representative: Zacco Sweden AB
(86) International application number: PCT/KR2019/012337
(87) International publication number: WO 2020/060357

(56) References cited:
- KR-A- 20130 141 403
- KR-A- 20180 065 509
- KR-B1- 100 805 607
- KR-B1- 102 016 001
- US-A1- 2014 372 449
- US-A1- 2015 083 797
- US-A1- 2018 039 997

## Description

### Technical Field

The present disclosure relates to a system and a method for producing and trading artworks. In particular, the present disclosure relates to a system and a method for producing an artwork material that contains an artificial nucleic acid sequence in order to store particular information provided from an artist in an artwork, and for trading the artwork produced using the artwork material.

### Background Art

In general, RFID technology is used for authentication and stability of artwork trading, and to realize this, various terminals capable of scanning, servers, programming, etc. have been developed.

Regarding this, Korean Patent 10-1812638 discloses a module for authenticating genuine goods, the module including: a secure element storing a certificate private key and a unique ID issued when the module is generated, and storing authentication information issued when a product is purchased, from a service server for authenticating genuine goods; an crypto engine encrypting the unique ID or the authentication information with the certificate private key; and a processor generating identification information including the encrypted unique ID when accessing a payment terminal, and transmitting the identification information to the payment terminal, and receiving the authentication information including sale information and product information that are input through the payment terminal, from the service server for authenticating genuine goods when authentication of the unique ID is completed, wherein the processor makes the crypto engine encrypt the authentication information including the sale information and the product information with the certificate private key, and the secure element stores the authentication information encrypted with the certificate private key and the unique ID encrypted with the certificate private key.

However, the above-described patent is limited just to an authentication and is not related to a system that encompasses artwork production and trade. In addition, since the above-described patent uses a secure element which is separated from a product, for example, an artwork, the variability of a mark is high and concern for forgery of original work is not fundamentally solved. If a third party performs authentication or management after the original artist's death, the verification process for the artwork may be more inconvenient.

US 2018/039997 A1 relates to associating product information with a product using a genetic tag.

### Disclosure

### Technical Problem

The present disclosure is intended to embed an artificial nucleic acid sequence authentication object into a material to be used for an artwork, and to manage production and trade of artworks through trade, a management platform, and an operation method that are based on the authentication object, and to reinforce an authentication system for original works, and to simultaneously solve controversy about a forgery, a copy, and a genuine article and inconvenience of appraisal through an authentication code integrated with an artwork.

### Technical Solution

According to an embodiment of the present disclosure, there is provided a method of managing production and trade of an artwork, the method including: storing, when in-material information is received from an artist terminal, the in-material information in an in-material information database, and converting the in-material information into an artificial nucleic acid sequence and requesting a material manufacturer terminal for production of an artwork material embedded with the artificial nucleic acid sequence at a material production request step; receiving artwork information after an artwork is produced using the artwork material, and registering the received artwork information in an artwork information database; providing the artwork information registered in the artwork information database to a purchaser terminal, and conducting, when a purchaser chooses a particular artwork through the purchaser terminal, a trade of the chosen artwork; and searching, when nucleic acid sequence information is received from the purchaser terminal, the in-material information database for the nucleic acid sequence information.

In an embodiment, there may be a plurality of pieces of the in-material information, and the artwork material may contain a plurality of the artificial nucleic acid sequences respectively corresponding to the plurality of the pieces of the in-material information, and the artwork may include multiple areas made of the artwork material embedded with the plurality of the artificial nucleic acid sequences corresponding to the plurality of the pieces of the in-material information that are different.

In an embodiment, the artwork may be an illustration or a design drawing of which contents in the multiple areas are distinguishable.

In an embodiment, the artificial nucleic acid sequence may be acquired by converting information bases that constitute the in-material information into a nucleic acid sequence on the basis of a preset correspondence relationship between the nucleic acid sequence information and the information bases, and by linking nucleic acids that constitute the nucleic acid sequence with markers on the basis of a preset correspondence relationship between the markers and the nucleic acids.

In an embodiment, the markers may be fluorescent materials.

In an embodiment, the nucleic acids may correspond to different colors of the fluorescent materials.

In an embodiment, the in-material information may be information for authenticating the artwork.

In an embodiment, the artwork material may be paint or Korean paper.

### Advantageous Effects

According to an embodiment of the present disclosure, production and trade of an artwork can be managed using a nucleic acid sequence and markers contained in an artwork material. In addition, authentication is performed using a nucleic acid sequence and markers contained in an artwork material, so that a risk of forgery or falsification can be significantly reduced.

According to an embodiment of the present disclosure, areas of an artwork contain different information and the information can be interpreted, so that authentication information as well as expository information or a story related to the content of the artwork can be provided.

### Description of Drawings

FIG. 1 is a diagram schematically illustrating a system for producing and trading artworks according to an embodiment of the present disclosure.
FIG. 2 is a configuration diagram illustrating a system for producing and trading artworks according to an embodiment of the present disclosure.
FIG. 3 is a diagram illustrating an example of an artwork according to an embodiment of the present disclosure.
FIG. 4 is a diagram illustrating an example of an artwork according to an embodiment of the present disclosure.
FIG. 5 is a diagram illustrating an example of an artwork according to an embodiment of the present disclosure.
FIG. 6 is a flowchart schematically illustrating a method for producing and trading artworks according to an embodiment of the present disclosure.
FIG. 7 is a flowchart illustrating an example of an artwork production and registration step of FIG. 6.
FIG. 8 is a diagram illustrating a polymerase chain reaction (PCR) technique used in a step of producing an artwork material embedded with a nucleic acid sequence object of FIG. 7.
FIG. 9 is a diagram illustrating artwork information registered in a system.
FIG. 10 is a flowchart illustrating an example of a trade step of FIG. 6.
FIG. 11 is a flowchart illustrating an example of a trade step of FIG. 6.
FIG. 12 is a diagram illustrating an example of use of a marker detection device of FIG. 2.
FIG. 13 is a diagram illustrating a configuration of a marker detection device of FIG. 12.
FIG. 14 is a flowchart illustrating a method of acquiring in-material information in a marker detection device.
FIG. 15 is a flowchart illustrating an example of an in-material information search step of FIG. 6.

### Best Mode

Hereinafter, exemplary embodiments of the present disclosure will be described in detail with reference to the accompanying drawings.

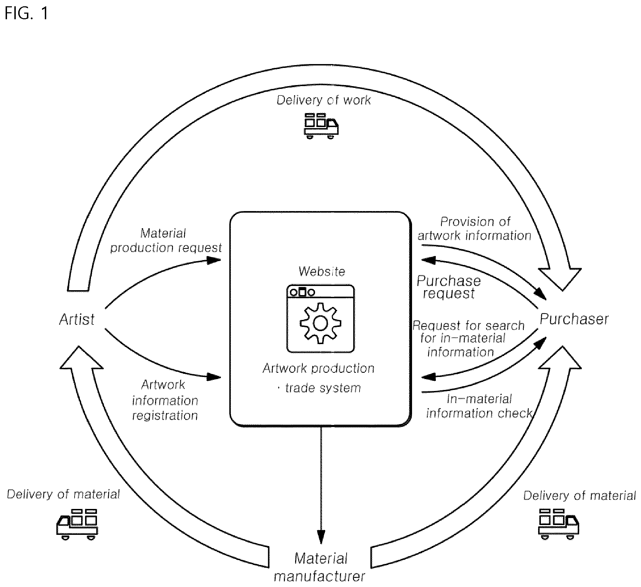

FIG. 1 is a diagram schematically illustrating a system 1 for producing and trading artworks according to an embodiment of the present disclosure.

Referring to FIG. 1, when the system 1 for producing and trading artworks according to the embodiment of the present disclosure receives a material production request from an artist, the system 1 makes a request to a material manufacturer to produce a material. Herein, the artist provides the system with the material production request and information to be included in the material, together. The system 1 stores the information to be included in the material, in an internal database and transmits the information to the material manufacturer. Accordingly, the material manufacturer generates a nucleic acid sequence object corresponding to the information to be included in the material and embeds the nucleic acid sequence object in the material for the artwork, thereby producing an artwork material. FIG. 1 shows that a person who generates a nucleic acid sequence object and a person who embeds a nucleic acid sequence object in an artwork material are one material manufacturer. However, the person who generates a nucleic acid sequence object and the person who embeds a nucleic acid sequence object in an artwork material may be different.

The artist produces an artwork using the artwork material delivered from the material manufacturer. The artist registers information on the artwork in the system 1. Although an artist is shown in FIG. 1, a manager who is entrusted by the artist with managing the work or an owner who purchases the work from the artist may register the information on the artwork.

A purchaser may examine information on an artwork registered in the system 1, and may make a purchase request to the system 1 for a particular artwork. The system 1 makes a request to the artist, the owner, or the manager for purchase according to the artwork information stored in the system 1, and thus the artist, the owner, or the manager transmits the artwork to the purchaser.

The purchaser acquires nucleic acid sequence information from the nucleic acid sequence object contained in the material of the purchased artwork, and may make a request to the system 1 for examining the nucleic acid sequence information. The system 1 may perform searching to determine whether the nucleic acid sequence information is stored in the internal database, and may provide a result of searching to the purchaser. According to an embodiment, the nucleic acid sequence information may be authentication information.

As shown in FIG. 1, the purchaser may purchase an artwork as well as an artwork material itself. In this embodiment, a nucleic acid sequence object including particular information is embedded in an artwork material. Therefore, the artwork material itself functions as a distinctive product and brings spending. For example, in a case of Korean paper made by an artisan, a nucleic acid sequence object corresponding to information that symbolizes an artisan is embedded in the Korean paper, so that the Korean paper is authenticated as being made by the particular artisan. Accordingly, the demand for Korean paper may be generated. The purchaser may examine information on an artwork material registered in the system 1, and may make a purchase request to the system 1 for a particular artwork material. The system 1 makes a request to the material manufacturer for purchase according to the information on the artwork material stored in the system 1, and thus the material manufacturer transmits the artwork material to the purchaser.

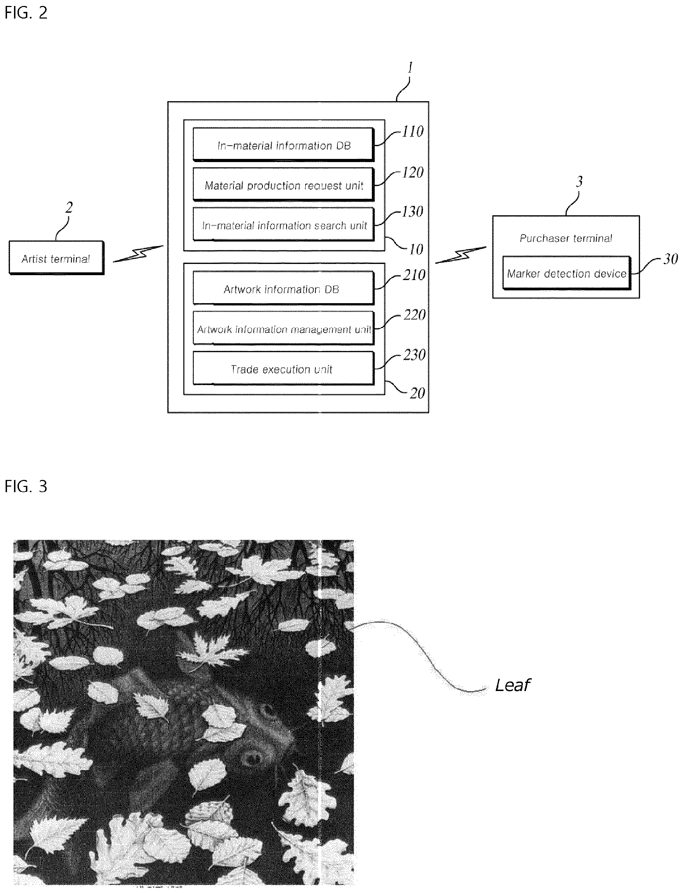

FIG. 2 is a configuration diagram illustrating a system 1 for producing and trading artworks according to an embodiment of the present disclosure.

Referring to FIG. 2, the system 1 communicates with an artist terminal 2 and a purchaser terminal 3. The system 1 includes a material production unit 10 and a trade processing unit 20.

The material production unit 10 receives, from an artist, a material production request and information to be included in a material together, the material production unit 10 requests the material manufacturer to produce the material. In addition, when the material production unit 10 receives a request to examine nucleic acid sequence information from a purchaser, the material production unit 10 examines the nucleic acid sequence information and provides a result thereof.

The material production unit 10 includes an in-material information database 110, a material production request unit 120, and an in-material information search unit 130.

The in-material information database 110 stores information to be included in a material, that is, in-material information, provided from an artist.

When the material production request unit 120 receives a material production request from an artist, the material production request unit 120 requests the material manufacturer to produce the material.

When the in-material information search unit 130 receives a request to examine nucleic acid sequence information from the purchaser terminal 3 or a marker detection device 30, the in-material information search unit 130 searches the in-material information database 110 to determine whether in-material information the same as the nucleic acid sequence information is present, and provides a result of searching to the purchaser.

The trade processing unit 20 registers artwork information provided from an artist, an owner, or a manager, and provides the artwork information so that the purchaser may examine the artwork information. In addition, when a purchase request is received from a purchaser, the trade processing unit 20 conducts a trade according to the purchase request and updates a result of the trade.

The trade processing unit 20 includes an artwork information database 210, an artwork information management unit 220, and a trade execution unit 230.

The artwork information database 210 stores the artwork information provided from the artist terminal 2. Herein, the artwork information is different from the in-material information that an artist provides when making a material production request. The artwork information refers to information on an artwork that an artist, an owner, or a manager provides through the artist terminal 2. The in-material information and the artwork information may be the same or different. For example, the artwork information may include at least one among artist information, an artwork image, a production year, owner information, manager information, and insurance company information.

The artwork information management unit 220 stores or changes the artwork information in the artwork information database 210 or searches the same for the artwork information. The artwork information management unit 220 stores the artwork information that an artist, an owner, or a manager provides, in the artwork information database 210. In addition, the artwork information management unit 220 provides the artwork information which a purchaser makes a request to examine. For example, the artwork information management unit 220 may provide a list of artwork images to the purchaser terminal 3. When the purchaser chooses a particular artwork image, the artwork information management unit 220 provides artwork information corresponding to the chosen artwork image to the purchaser terminal 3. In addition, the artwork information management unit 220 updates artwork information when information on an artwork is changed, for example, the artwork is sold, the manager is changed, and so on.

When the trade processing unit 230 receives a purchase request from the purchaser terminal 3, the trade processing unit 230 requests, for purchase, the owner or manager of the work to be purchased. When the trade is completed, the trade processing unit 230 requests the artwork information management unit 220 to update the owner information.

FIG. 3 is a diagram illustrating an example of an artwork according to an embodiment of the present disclosure.

The artwork may be a picture colored with paints as shown in FIG. 3. In the picture of FIG. 3, the in-material information contained in a paint for coloring the leaf part may include an artist authentication code, an expression style (oil painting), a material (an oil paint), and the content (which tree the leaf is from, the time or place at which fallen leaves occur, etc.).

Through the above-described method, as if each individual has their own genome, a nucleic acid sequence object corresponding to an authentication code for authenticating the artist or to the content of the artist's thinking may be stored in the artwork.

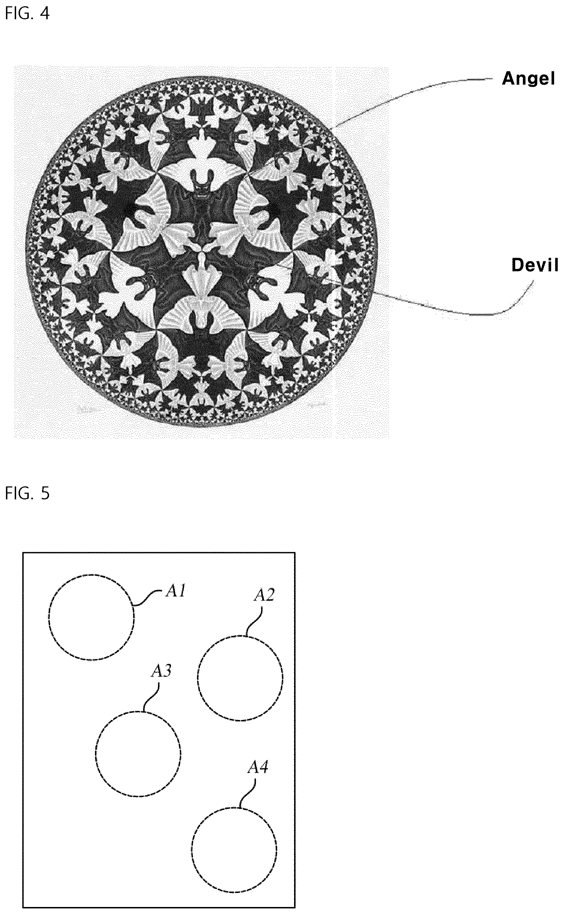

FIG. 4 is a diagram illustrating an example of an artwork according to an embodiment of the present disclosure.

In FIG. 4, different pieces of in-material information may be embedded in a white paint corresponding to the angel part and in a black paint corresponding to the devil part. The artist uses the white paint and the black paint used in the artwork of FIG. 4 also in other works so that the works involve the theme of angels and devils. That is, according to the embodiment of the present disclosure, beyond simply authenticating the genuineness of any work, a function of involving the artist's thinking or value system in a series of works may be served.

In addition, the trade processing unit 20 of the system 1 may conduct trade of artworks as well as works of art of other genres, such as plays, music, and musicals. That is, the artwork information management unit 220 of the trade processing unit 20 may register information on a work of art provided from the artist, the owner, or the manager in the artwork information database 210, and may provide the information on the work of art so that a purchaser examines the information on the work of art. In addition, when the trade execution unit 230 receives a purchase request from a purchaser, the trade execution unit 230 conducts a trade according to the purchase request and updates a result of the trade.

In an embodiment, artwork information about the artwork of FIG. 4 may include the theme of angels and devils, and information on a work of art of another genre, for example, music, may include the theme of angels and devils. In this case, a purchaser uses a purchaser terminal 3 to search the artwork information database 210 for the theme of angels and devils and finds both the artwork of FIG. 4 and music, and may purchase both the artwork and the music having the theme of angels and devils. That is, according to this embodiment, multiple artworks and a common thinking or value system of works of art corresponding to different genres may be managed, and may be provided to a purchaser.

FIG. 5 is a diagram illustrating an example of an artwork according to an embodiment of the present disclosure.

Referring to FIG. 5, an artwork may include multiple areas A1 to A4. In addition, pieces of in-material information distinguished for the multiple areas A1 to A4 may be included. The artwork may be an illustration or a design drawing that may include distinguished pieces of artwork information.

The marker detection device 30 of FIG. 1 may acquire in-material information for each of the areas A1~A4 of the artwork. The areas A1 to A4 may be set on the basis of positions in the artwork that are visually or physically distinguished, or may be set at any positions in the artwork rather than visually or physically distinguished.

For example, in a case in which an artwork is an illustration in which different pictures are drawn in the respective areas A1 to A4, different pieces of artwork information may be acquired from the pictures corresponding to the respective areas A1 to A4. Accordingly, a story may be provided using the artwork.

Alternatively, in a case in which an artwork is a design drawing, areas A1 to A4 may be set in parts for which explanation is required, and a nucleic acid sequence and markers corresponding to the explanation of each of the areas A1~A4 may be included in the material of each of the areas A1 to A4.

Hereinafter, a method for producing and trading artworks according to an embodiment of the present disclosure will be described.

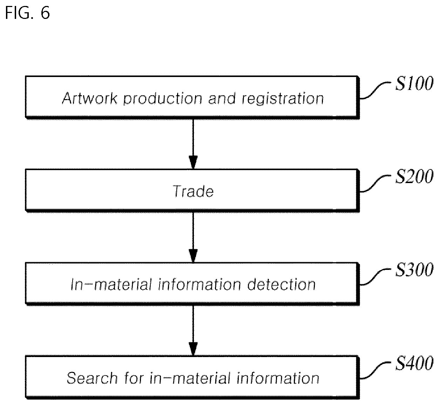

FIG. 6 is a flowchart schematically illustrating a method for producing and trading artworks according to an embodiment of the present disclosure.

Referring to FIG. 6, the method for producing and trading artworks according to the embodiment of the present disclosure may include an artwork production and registration step S100, a trade step S200, an in-material information detection step S300, and an in-material information search step S400.

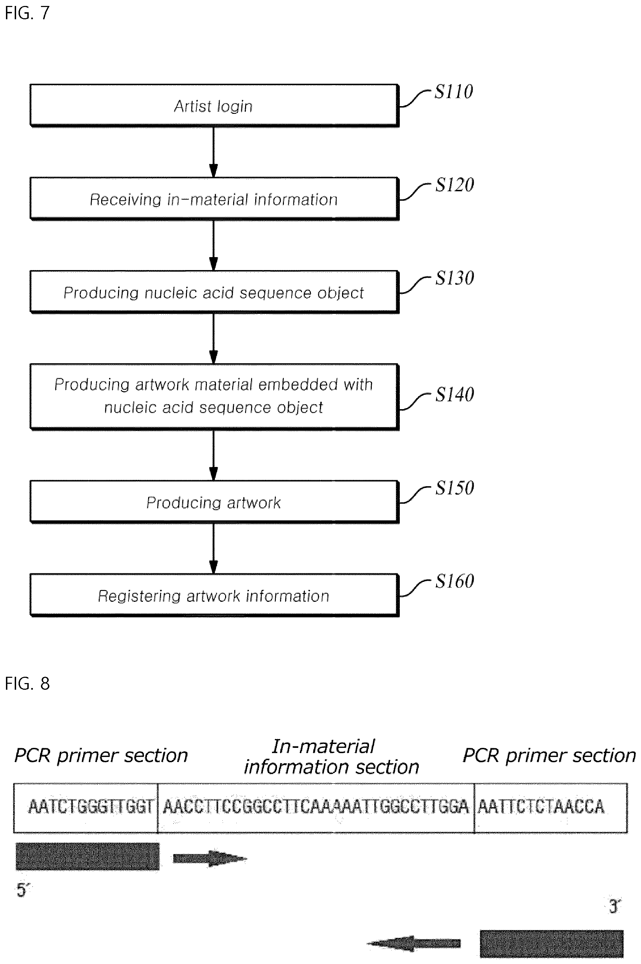

FIG. 7 is a flowchart illustrating an example of the artwork production and registration step S100 of FIG. 6.

Referring to FIG. 7, first, an artist logs in through an artist terminal at step S110.

Next, when the artist inputs information to be included in a material of an artwork through the artist terminal 2, the system 1 receives the information at step S120.

When the in-material information is received from the artist, the system 1 requests a manufacturer of a nucleic acid sequence object to produce a nucleic acid sequence object corresponding to the in-material information and the manufacturer of the nucleic acid sequence object produces the nucleic acid sequence object at step S130.

A manufacturer of an artwork material receives the nucleic acid sequence object from the manufacturer of the nucleic acid sequence object and produces an artwork material embedded with the nucleic acid sequence object at step S140.

The artist receives the artwork material embedded with the nucleic acid sequence object from the manufacturer of the artwork material and produces the artwork using the received artwork material at step S150.

After production of the artwork is completed, the artist registers information on the artwork in the system 1 at step S160.

FIG. 8 is a diagram illustrating a polymerase chain reaction (PCR) technique used in the step S140 of producing the artwork material embedded with the nucleic acid sequence object of FIG. 7.

In this embodiment, the artwork material is embedded with multiple nucleic acid sequence objects in order to prevent loss or change of the nucleic acid sequence objects contained in the artwork material. Herein, the technique used to amplify the nucleic acid sequence object is the PCR technique.

Referring to FIG. 8, in the PCR technique, PCR primers are used, and a nucleic acid sequence object corresponding to in-material information according to the embodiment of the present disclosure is included between the PCR primers.

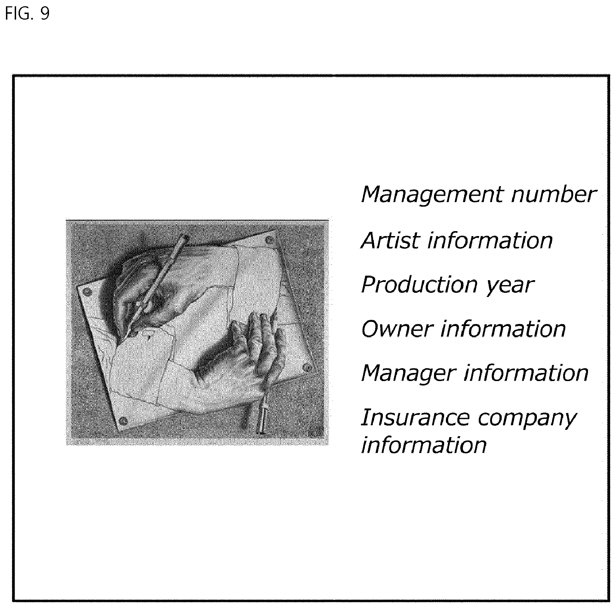

FIG. 9 is a diagram illustrating artwork information registered in the system 1.

Referring to FIG. 9, the artwork information may include an artwork image, a management number, artist information, a production year, owner information, manager information, and insurance company information. The management number is a value that the system 1 uses to identify an artwork, and may be automatically assigned by the system 1 when an artwork is first registered in the system 1. When an artist first inputs artwork information, artist information and owner information are the same.

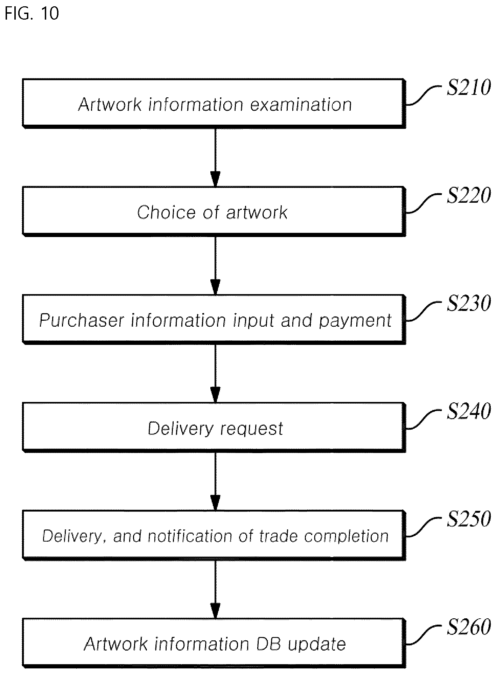

FIG. 10 is a flowchart illustrating an example of the trade step S200 of FIG. 6.

Referring to FIG. 10, a purchaser accesses the system 1 through the purchaser terminal 3 and examines artworks at step S210. The artwork information management unit 220 of the system 1 may transmit a list of artworks, for example, representative images of artworks, to the purchaser terminal 3. The purchaser may click a particular one of the representative images displayed on the screen of the purchaser terminal 3 and may examine artwork information of the particular artwork in detail.

Next, the purchaser chooses a particular artwork on the basis of the examined artwork information at step S220.

The purchaser inputs purchaser information to the system 1 and makes payment at step S230.

Next, the trade execution unit 230 of the system 1 examines artwork information of the chosen artwork in the artwork information database 210 and acquires owner information or manager information. The trade execution unit 230 makes a delivery request to the owner or the manager at step S240.

The artwork is delivered from the owner or the manager to the purchaser and the owner or the manager notifies the system 1 of trade completion at step S250.

When the trade execution unit 230 of the system 1 receives the notification of the trade completion, the trade execution unit 230 requests the artwork information management unit 220 to update the owner information with the purchaser information. Accordingly, the artwork information management unit 220 updates the owner information of the artwork information about the sold artwork in the artwork information database 210 with the purchaser information at step S260.

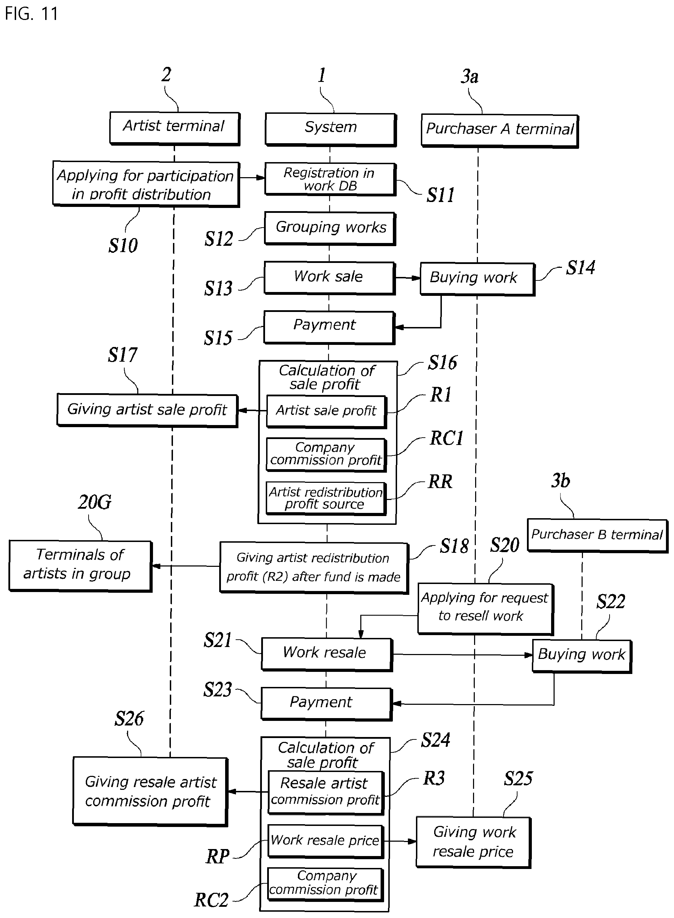

FIG. 11 is a flowchart illustrating an example of the trade step of FIG. 6, which is a diagram illustrating calculation of a sale profit in detail.

Referring to FIG. 11, an artist who wants to sell a work may access the system 1 through the terminal 2 and may apply for participation in a profit distribution program at step S10. The system 1 makes its own judgment about artists or works that have applied for participation so as to select artists or works to be registered in the profit distribution program, and registers artist information on the selected artists, work information on the selected works, etc. in the artwork information database 210 at step S11. Herein, a work object may be received, or may be stored in a method that the operating company and the artist agree.

The system 1 groups works so that works containing the same artificial nucleic acid sequence are included in an individual work group at step S12. Herein, the grouped works include finished works of art as well as materials of a work of art.

The system 1 conducts a work exhibition and sales at step S13. Herein, the trade method for works may be a real-market trade or e-commerce through the Internet. For example, the system 1 may upload, to an Internet e-commerce system, work information (an artist name, a work name, a production year, authentication information for a genuine article, etc.), supplier information (a name, an address, a phone number, an e-mail address of a supplier, etc.), and price information required for sale or rental, such as sale or rental price information. Afterward, purchaser A accesses the system 1 through a purchaser terminal 3a, determines buying a work or a material, and pays a purchase price at steps S14 and S15. Herein, the system 1 may be in association with a financial network to arrange for payment.

The system 1 conducts calculation of the paid sale profit at step S16. Specifically, the sale profit is divided into an artist sale profit R1 that is given to the artist of the sold work, into a company commission profit RC1 that is given to the operator of the system, and into an artist redistribution profit source RR excluding the artist sale profit R1 and the company commission profit RC1. Herein, the artist sale profit R1 may be calculated by multiplying the sale profit and a predetermined artist sale profit ratio, and the company commission profit RC1 may be calculated by multiplying the sale profit and a predetermined company commission profit ratio. The artist redistribution profit source RR is to redistribute the profit to the original artist, specifically, the artist corresponding to the in-material information matched to the artificial nucleic acid sequence, for the work of art made using the material containing the artificial nucleic acid sequence of the artist.

The system 1 gives the artist sale profit R1 of the sale profit to the artist for the sold work at step S17. Calculation is conducted in such a manner that the artist redistribution profit source RR is given to the original artist in the work group to which the sold work belongs. For example, the artist redistribution profit sources RRs of the works in the same work group sold during a predetermined sale period may be collected to make an artist redistribution profit fund. As another example, the system 1 may distribute the artist redistribution profit fund equality to artists 20G belonging to the same work group at a predetermined point in time, which is given as an artist redistribution profit R2 at step S18. For example, regarding the distribution of the artist redistribution profit, when a group basis work sale term during a predetermined period set by an operating company expires, the total amount of artist redistribution profit sources RRs made from sold works among works belonging to a particular group is equally divided and distributed to all the artists 20G in the group regardless of whether works are sold or not, which is given to the artists as the artist redistribution profit R2 at a predetermined point in time.

In the meantime, the system 1 may receive an application from the purchaser A's terminal 3a for a request to resell the work sold through intermediation of the system 1, at step S20. The system 1 conducts the requested resale of the work at step S21. Purchaser B accesses the system 1 through the purchaser B's terminal 3b, determines buying the work, and pays a purchase price at steps S22 and S23.

Next, the system 1 conducts calculation of the paid resale profit at step S24. Specifically, the resale profit is divided into a work resale price RP that is given to the purchaser, into a company commission profit RC2 given to the operator of the system, and into a resale artist commission profit R3 excluding the work resale price RP and the company commission profit RC. Herein, the resale artist commission profit R3 may be calculated by multiplying the resale profit and a predetermined resale artist commission profit ratio. The system 1 gives the work resale price RP of the resale profit to the purchaser A's terminal 3a for the sold work at step S25, and conducts calculation in such a manner that the resale artist commission profit R3 is given to the artist for the resold work.

For example, purchaser A (3a) who has purchased a particular work may request the operating company to resell the work, and the operating company may conduct exhibition or sale of the work through a general sale, an auction, etc. In a case in which purchaser B (3b) purchases the work, purchaser B pays a resale price to which the work price RP, the company commission profit RC2, and the artist commission profit R3 are applied, and the operating company gives the work price RP to purchaser A (3a), gives the company commission profit RC2 to the operating company itself, and gives the artist commission profit R3 to the artist. Herein, the resale artist commission profit R3 is imposed for use of the copyright for the artificial nucleic acid sequence of the artist, and may be made regardless of the level of the purchase price of the work before purchaser A (3a) resells the work.

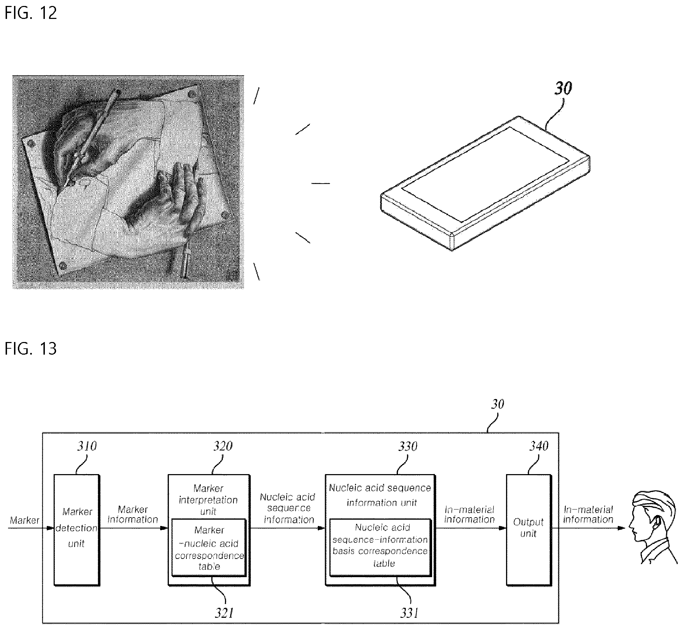

Hereinafter, a method in which the purchaser terminal 3 detects in-material information from an artwork will be described in detail with reference to FIGS. 12 to 14.

FIG. 12 is a diagram illustrating an example of use of the marker detection device 30 according to an embodiment of the present disclosure.

Referring to FIG. 12, an artwork is made of an artwork material. The material of the artwork constitutes the artwork 1 itself. In a case in which an artwork is a painting, the material may be paint or paper. In a case in which an artwork is Korean paper craft, the material may be Korean paper. The material of the artwork may contain an artificial nucleic acid sequence in which predetermined artwork information is encrypted as described above, and a marker is connected to each of the nucleic acids constituting the artificial nucleic acid sequence. According to the embodiment of the present disclosure, the artificial nucleic acid sequence including the artwork information and the markers are contained in the artwork material, so that forgery or falsification of artwork information is difficult.

The marker detection device 30 may acquire information from the markers contained in the material of the artwork. The acquired information may be, for example, information for authenticating the artwork or information for describing the contents of the artwork.

FIG. 13 is a diagram illustrating a configuration of the marker detection device 30 of FIG. 12.

Referring to FIG. 13, the marker detection device 30 includes a marker detection unit 310, a marker interpretation unit 320, a nucleic acid sequence interpretation unit 330, and an output unit 340.

The marker detection unit 310 detects markers contained in a material of an artwork. For example, a marker contained in a material of an artwork may be a fluorescent material, and a known device capable of detecting fluorescent materials may be used as the marker detection unit 310. The marker detection unit 310 detects markers and converts the same into an electronic form that the marker interpretation unit 320 is able to process.

The marker interpretation unit 320 acquires nucleic acid sequence information corresponding to the markers detected by the marker detection unit 310. The marker interpretation unit 320 includes a marker-nucleic acid correspondence table 210, and may use the marker-nucleic acid correspondence table 210 to find out which nucleic acids are connected to the detected markers. The marker-nucleic acid correspondence table 210 may have, for example, a correspondence relationship in the table below. The marker interpretation unit 320 may generate nucleic acid sequence information by connecting pieces of nucleic acid information corresponding to multiple markers.

**[Table 1]**

| Marker | Nucleic acid |
|---|---|
| Red | A |
| Yellow | T |
| Green | G |
| Blue | C |
| Purple | U |

According to the table, adenine A is connected when a fluorescent material is red, thymine T is connected to the material of the artwork when a fluorescent material is yellow, guanine G is connected to the material of the artwork when a fluorescent material is green, cytosine C is connected to the material of the artwork when a fluorescent material is blue, and uracil U is connected to the material of the artwork when a fluorescent material is purple.

However, the correspondence relationship between markers and nucleic acids is not limited to the above example. A color of a marker may correspond to a nucleic acid in a way different from the table. Alternatively, varying the brightness, a fluorescent material in a single color may correspond to nucleic acids. Alternatively, a material other than a fluorescent material may be used as a marker.

The nucleic acid sequence interpretation unit 330 may acquire in-material information by decoding the nucleic acid sequence information provided from the marker interpretation unit 320. The nucleic acid sequence interpretation unit 330 includes a nucleic acid sequence-information basis correspondence table 310, and may use the nucleic acid sequence-information correspondence table 310 to find out which information basis the nucleic acid sequence information corresponds to. The nucleic acid sequence interpretation unit 330 may acquire in-material information by connecting information bases corresponding to the nucleic acid sequence information.

In a method for setting by matching a nucleic acid sequence to information bases, for example, as shown in the table below, according to the number of times that one or two or more nucleobases (sequence bases) are connected to each other repeatedly up to a predetermined allowable number of times, series of information bases are set sequentially, and a particular nucleobase combination is set as a marker showing sequence combination.

**[Table 2]**

| Sequence combination | Information basis |
|---|---|
| A | 1 |
| AA | 2 |
| AAA | 3 |
| C | 4 |
| CC | 5 |
| CCC | 6 |
| T | 7 |
| TT | 8 |
| TTT | 9 |
| G | 0 |
| ATG | Combination marker |

### (Sequence bases are A, T, C, and G)

The table shows an example of a method of setting a particular information basis to an artificial combination of nucleobases and a method of representing value information by using the setting method. As shown in the table, nucleobases A, C, T, and G are used, and a predetermined allowable number of times is set to 3, and ATG is used as a marker for showing combination. Marker ATG shows direction for a sequence analysis, and may also be used as an indicator that indicates whether the direction of a nucleobase analysis is correct or not. For example, if the content of the analysis includes sequence combination GTA, this indicates reverse interpretation. As shown in the table, in representing in-material information "1480632" that is a part of a resident registration number, in order to represent information bases "1", "4", "8", etc., sequence combinations "A", "C", "TT", etc. corresponding thereto are used. To check appropriate combination form thereof, combination marker "ATG" is used between each of the sequence combinations. Therefore, a series of information bases is preset for each random combination of sequence bases. Then, in representing particular information data "1480632", a nucleic acid sequence thereof is constructed, so that the in-material information is easily identified as follows.

Although the case in which information bases constituting in-material information are numbers has been described as an example, information bases may be letters such as alphabet letters, Korean consonants and vowels, etc.

The nucleic acid sequence interpretation unit 330 may interpret a nucleic acid sequence in a different manner instead of the nucleic acid sequence-information basis correspondence table.

**[Table 3]**

| Artist code | Art classification | Artwork material | Technique | Content type |
|---|---|---|---|---|
| 0001 | Oil painting | Oil paint | Impressionism | Person |
| AAA | TTG | AAC | GGT | CTC |

For example, the nucleic acid sequence information interpreted by the marker interpretation unit 320 may be "AAATTGAACGGTCTC". The nucleic acid sequence information may include fields of an artist code, art classification, an artwork material, a technique, and a content type in order. That is, the nucleic acid sequence interpretation unit 330 divides the nucleic acid sequence information in order, starting from the front, so it is recognized that "AAA" represents an artist code, "TTG" represents an art classification, "AAC" represents an artwork material, "GGT" represents a technique used, and "CTC" represents a content type.

The nucleic acid sequence interpretation unit 330 interprets the nucleic acid sequence information corresponding to each of the fields. In this embodiment, "AAA" is interpreted as "0001", "TTG" is interpreted as indicating oil painting, "AAC" is interpreted as oil paint, "GGT" is interpreted as impressionism, and "CTC" is interpreted as a person. In interpreting each field of the nucleic acid sequence information, the nucleic acid sequence interpretation unit 330 may use different nucleic acid sequence conversion tables. In other words, the nucleic acid sequence corresponding to the artist code field, the art classification field, the artwork material field, the technique field, and the content type field may be converted into information corresponding to the respective fields, by using different tables.

**[Table 4]**

| Art classification | Classification code | Nucleic acid sequence information |
|---|---|---|
| Cave painting | 0001 | AAT |
| ... | ... | ... |
| Oil painting | 1010 | TTG |
| ... | ... | ... |

The table shows a correspondence relationship between art classification and nucleic acid sequence information. In interpreting the art classification field, the nucleic acid sequence interpretation unit 330 may use the table and interprets the art classification field as corresponding to oil painting because "TTG" corresponds to classification code "1010".

In this embodiment, the number and the contents of the fields included in the nucleic acid sequence information are only examples, and the number or the contents of the fields may be variously modified. In addition, in this embodiment, although it has been described that the number of bases in a nucleic acid sequence corresponding to each field is three, this is also only an example and the number of bases in a nucleic acid sequence may vary.

The output unit 340 outputs the in-material information acquired by the nucleic acid sequence interpretation unit 330. The output unit 340 may be, for example, a display device visually outputting the acquired information or an audio device audibly outputting the acquired information.

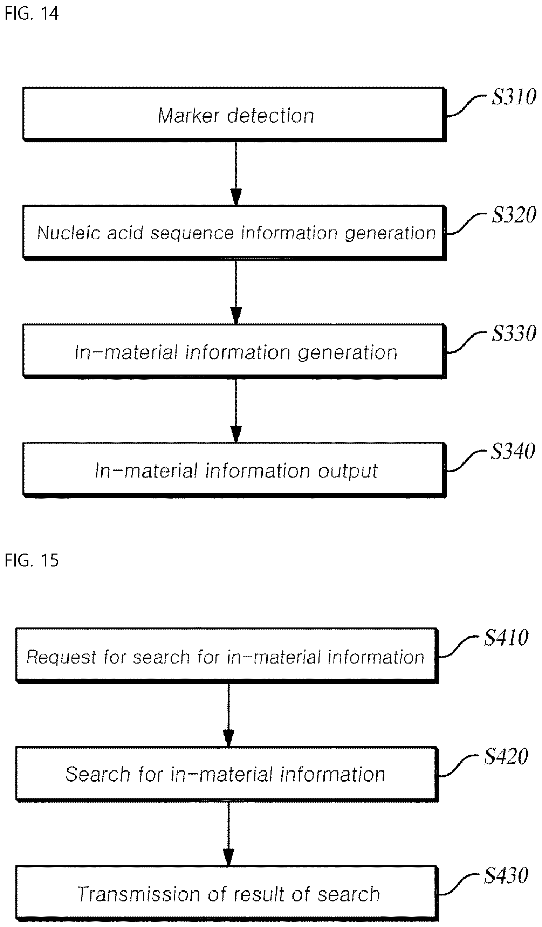

FIG. 14 is a flowchart illustrating a method of acquiring in-material information in the marker detection device 1.

Referring to FIG. 14, first, the marker detection unit 310 detects markers contained in a material of an artwork at step S310. Herein, an artwork is made of a material containing a nucleic acid sequence, and the nucleic acids constituting the nucleic acid sequence are linked with markers.

Next, the marker interpretation unit 320 acquires, on the basis of a preset correspondence relationship between markers and nucleic acids, nucleic acid information corresponding to a marker detected at the marker detection step and generates nucleic acid sequence information from the acquired nucleic acid information at step S320. The correspondence relationship between markers and nucleic acids may be stored in a marker-nucleic acid correspondence table 321.

Next, the nucleic acid sequence interpretation unit 330 acquires, on the basis of a preset correspondence relationship between nucleic acid sequence information and information bases, information bases corresponding to the nucleic acid sequence information generated at the nucleic acid sequence generation step, and generates in-material information from the acquired information bases at step S330. The correspondence relationship between nucleic acid sequence information and information bases may be stored in a nucleic acid sequence-information correspondence table 331.

Last, the output unit 340 outputs the generated artwork information to the screen or in sound at step S340.

In an embodiment, an artwork may include multiple areas 1A to 4A, and the above-described steps S310 to S340 may be performed for each of the areas 1A to 4A.

FIG. 15 is a flowchart illustrating an example of an in-material information search step S400 of FIG. 6. As described above, a purchaser may acquire in-material information from a nucleic acid sequence object contained in the material of the purchased artwork.

First, while transmitting the in-material information, the purchaser requests the system 1 to search for the in-material information at step S410. In a case in which the marker detection device 30 itself has an information transmission function, the marker detection device 30 itself may access the system 1 and may transmit the in-material information. Alternatively, using a separate purchaser terminal 3, the purchaser may access the system 1 and may request the system 1 to search for the in-material information acquired from the marker detection device 30.

When searching for the in-material information is requested from the purchaser, the in-material information search unit 130 of the system 1 searches the in-material information database 110 for the in-material information at step S320.

The in-material information search unit 130 transmits a result of searching for the in-material information to the purchaser (for example, the purchaser terminal 3 or the marker detection device 30 of the purchaser) at step S330. When information matched to the in-material information is not present in the in-material information database 110, the purchaser (the purchaser terminal 3 or the marker detection device 30 of the purchaser) is notified that the matched information is absent. When information matched to the in-material information is present in the in-material information database 110, the purchaser (the purchaser terminal 3 or the marker detection device 30 of the purchaser) is notified that the matched information is present. Herein, the purchaser may be notified of artist information corresponding to the in-material information.

According to an embodiment of the present disclosure, an artwork made of an artwork material containing a nucleic acid sequence (an artificial nucleic acid sequence object) is produced and traded, so that distribution of an artwork is easily managed, and the present disclosure may be used to solve a problem with controversy, such as forgery, etc., or ownership in trading an artwork.

According to an embodiment of the present disclosure, added value may be created for an artwork material containing a nucleic acid sequence and a marker. As if a famous artist signs autographs, if an artist sells special artwork materials containing codes for authenticating the artist, all works produced using the artwork materials may form a group. Accordingly, profit may be generated from sale of artwork materials, and secondary added value may be generated for the works using the artwork materials. For example, if Korean paper, which is Korean traditional paper, containing an authentication code representing Korea or codes representing respective production regions is produced and distributed over the world, it is a guaranteed Korean paper that admits a work handmade by an artisan, not just simple Korean paper. This Korean paper may be authenticated as Korean and may be a certification mark for many people who love Korean paper craft. Moreover, the profit that a Korean paper craftsperson earns by producing Korean paper with craftsperson's authentication and distributing it to trainees will improve the value of the craftsperson.

Although an exemplary embodiment of the present disclosure has been described in detail, the present disclosure is not limited thereto, and it is obvious to those skilled in the art that various modification and applications can be made within the scope of the technical idea of the present disclosure. Accordingly, the true scope of the present disclosure should be interpreted by the following claims, and all technical ideas within the scope equivalent thereto should be interpreted as being included in the scope of the present disclosure.

## Claims

1. A method of managing production and trade of an artwork, the method comprising:
storing, as in-material information is received from an artist terminal, the in-material information in an inmaterial information database, and converting the in-material information into an artificial nucleic acid sequence and requesting a material manufacturer terminal for production of an artwork material embedded with the artificial nucleic acid sequence at a material production request step;
receiving artwork information after an artwork is produced using the artwork material, and registering the received artwork information in an artwork information database;
providing the artwork information registered in the artwork information database to a purchaser terminal, and conducting, when a purchaser chooses a particular artwork through the purchaser terminal, a trade of the chosen artwork; and
searching, as nucleic acid sequence information is received from the purchaser terminal, the in-material information database for the nucleic acid sequence information;
wherein the artificial nucleic acid sequence is acquired by converting information bases that constitute the in-material information into a nucleic acid sequence on the basis of a preset correspondence relationship between the nucleic acid sequence information and the information bases, and by linking nucleic acids that constitute the nucleic acid sequence with markers on the basis of a preset correspondence relationship between the markers and the nucleic acids, wherein the markers are fluorescent materials, and wherein the nucleic acids correspond to different colors of the fluorescent materials.

2. The method of claim 1, wherein there are a plurality of pieces of the in-material information,
the artwork material contains a plurality of the artificial nucleic acid sequences respectively corresponding to the plurality of the pieces of the in-material information, and
the artwork includes multiple areas made of the artwork material embedded with the plurality of the artificial nucleic acid sequences corresponding to the plurality of the pieces of the in-material information that are different.

3. The method of claim 2, wherein the artwork is an illustration or a design drawing of which contents in the multiple areas are distinguishable.

4. The method of claim 1, wherein the in-material information includes information for authenticating the artwork.

5. The method of claim 1, wherein the artwork material is paint, Korean paper, or ink.

6. The method of claim 1, further comprising:
after the conducting of the trade, calculating a sale profit in such a manner that the sale profit is divided into an artist sale profit given to an artist of the sold work, into a company commission profit given to an operator of the system, and into an artist redistribution profit source excluding the artist sale profit and the company commission profit, and the artist redistribution profit source is given to an original artist who causes the artificial nucleic acid sequence contained in the sold work to be produced.

7. A system for carrying out the method according to any of claims 1-6.

## Patentansprüche

1. Verfahren zum Verwalten der Herstellung und des Handels eines Kunstwerks, wobei das Verfahren Folgendes umfasst:
Speichern, wenn Materialinhaltsinformationen von einem Endgerät eines Künstlers empfangen werden, der Materialinhaltsinformationen in einer Materialinhaltsinformationsdatenbank und Umwandeln der Materialinhaltsinformationen in eine künstliche Neukleinsäuresequenz und Anfordern der Herstellung eines Kunstwerkmaterials, das in die künstliche Nukleinsäuresequenz eingebettet ist, bei einem Endgerät eines Materialherstellers in einem Materialherstellungsanforderungsschritt;
Empfangen von Kunstwerkinformationen, nachdem ein Kunstwerk unter Verwendung des Kunstwerkmaterials hergestellt wurde, und Registrieren der empfangenen Kunstwerkinformationen in einer Kunstwerkinformationsdatenbank;
Bereitstellen der Kunstwerkinformationen, die in der Kunstwerkinformationsdatenbank registriert sind, an ein Endgerät eines Käufers und Durchführen, wenn ein Käufer ein konkretes Kunstwerk über das Endgerät des Käufers auswählt, eines Handels des ausgewählten Kunstwerks; und
Durchsuchen, wenn Nukleinsäuresequenzinformationen von dem Endgerät des Käufers empfangen werden, der Materialinhaltsinformationsdatenbank nach den Nukleinsäuresequenzinformationen;
wobei die künstliche Nukleinsäuresequenz durch Umwandeln von Informationsgrundlagen, die die Materialinhaltsinformationen darstellen, in eine Nukleinsäuresequenz auf Grundlage einer voreingestellten Korrespondenzbeziehung zwischen den Nukleinsäuresequenzinformationen und den Informationsgrundlagen und durch Verknüpfen von Nukleinsäuren, die die Nukleinsäuresequenz darstellen, mit Markern auf Grundlage einer voreingestellten Korrespondenzbeziehung zwischen den Markern und den Nukleinsäuren erfasst wird, wobei die Marker fluoreszierende Materialien sind und wobei die Nukleinsäuren verschiedenen Farben der fluoreszierenden Materialien entsprechen.

2. Verfahren nach Anspruch 1, wobei eine Vielzahl von Teilen der Materialinhaltsinformationen vorliegt,
das Kunstwerkmaterial eine Vielzahl von künstlichen Nukleinsäuresequenzen enthält, die jeweils der Vielzahl von Teilen der Materialinhaltsinformationen entsprechen, und
das Kunstwerk mehrere Bereiche beinhaltet, die aus dem Kunstwerkmaterial bestehen, das in die Vielzahl von künstlichen Nukleinsäuresequenzen eingebettet ist, die der Vielzahl von Teilen der Materialinhaltsinformationen entsprechen, die unterschiedlich sind.

3. Verfahren nach Anspruch 2, wobei das Kunstwerk eine Veranschaulichung oder eine Entwurfszeichnung davon ist, welche Inhalte in den mehreren Bereichen unterscheidbar sind.

4. Verfahren nach Anspruch 1, wobei die Materialinhaltsinformationen Informationen zum Authentifizieren des Kunstwerks beinhalten.

5. Verfahren nach Anspruch 1, wobei das Kunstwerkmaterial Farbe, Hanji oder Tinte ist.

6. Verfahren nach Anspruch 1, ferner umfassend:
nach dem Durchführen des Handels, Berechnen eines Verkaufsgewinns derart, dass der Verkaufsgewinn in einen Verkaufsgewinn des Künstlers, den ein Künstler für das verkaufte Werk erhält, in eine Unternehmensprovision, die ein Betreiber des Systems erhält, und in eine Umverteilungsgewinnquelle des Künstlers, die den Verkaufsgewinn des Künstlers und die Unternehmensprovision ausschließt, aufgeteilt wird und die Umverteilungsgewinnquelle des Künstlers ein Originalkünstler erhält, der bewirkt, dass die künstliche Nukleinsäuresequenz, die in dem verkauften Werk enthalten ist, hergestellt wird.

7. System zum Ausführen des Verfahrens nach einem der Ansprüche 1-6.

## Revendications

1. Procédé de gestion de la production et du commerce d'une œuvre d'art, le procédé comprenant :
le stockage, à mesure que les informations de matériau sont reçues d'un terminal d'artiste, des informations de matériau dans une base de données d'informations de matériau, et la conversion des informations de matériau en une séquence d'acide nucléique artificielle et la demande à un terminal de fabricant de matériau pour la production d'un matériau d'œuvre d'art intégré avec la séquence d'acide nucléique artificielle à une étape de demande de production de matériau ;
la réception d'informations d'œuvre d'art après qu'une œuvre d'art a été produite à l'aide du matériau d'œuvre d'art, et l'enregistrement des informations d'œuvre d'art reçues dans une base de données d'informations d'œuvre d'art ;
la fourniture des informations d'œuvre d'art enregistrées dans la base de données d'informations d'œuvre d'art à un terminal d'acheteur, et la réalisation, lorsqu'un acheteur choisit une œuvre d'art particulière via le terminal d'acheteur, d'une transaction de l'œuvre d'art choisie ; et
la recherche, à mesure que les informations de séquence d'acide nucléique sont reçues du terminal d'acheteur, de la base de données d'informations de matériau pour les informations de séquence d'acide nucléique ;
dans lequel la séquence d'acide nucléique artificielle est acquise en convertissant des bases d'informations qui constituent les informations dans le matériau en une séquence d'acide nucléique sur la base d'une relation de correspondance prédéfinie entre les informations de séquence d'acide nucléique et les bases d'informations, et en liant des acides nucléiques qui constituent la séquence d'acide nucléique avec des marqueurs sur la base d'une relation de correspondance prédéfinie entre les marqueurs et les acides nucléiques, dans lequel les marqueurs sont des matériaux fluorescents, et dans lequel les acides nucléiques correspondent à différentes couleurs des matériaux fluorescents.

2. Procédé selon la revendication 1, dans lequel il existe une pluralité d'éléments d'informations dans le matériau,
le matériau d'œuvre d'art contient une pluralité de séquences d'acide nucléique artificielles correspondant respectivement à la pluralité des éléments d'informations dans le matériau, et l'œuvre d'art comprend plusieurs zones constituées du matériau d'œuvre d'art intégré avec la pluralité des séquences d'acide nucléique artificielles correspondant à la pluralité des éléments d'informations dans le matériau qui sont différents.

3. Procédé selon la revendication 2, dans lequel l'œuvre d'art est une illustration ou un dessin de conception dont le contenu dans les multiples zones est distinguable.

4. Procédé selon la revendication 1, dans lequel les informations de matériau comprennent des informations permettant d'authentifier l'œuvre d'art.

5. Procédé selon la revendication 1, dans lequel le matériau d'œuvre d'art est de la peinture, du papier coréen ou de l'encre.

6. Procédé selon la revendication 1, comprenant en outre :
après la réalisation de la transaction, le calcul d'un bénéfice de vente de telle manière que le bénéfice de vente soit divisé en un bénéfice de vente d'artiste donné à un artiste de l'œuvre vendue, en un bénéfice de commission d'entreprise donné à un opérateur du système, et en une source de bénéfice de redistribution d'artiste excluant le bénéfice de vente d'artiste et le bénéfice de commission d'entreprise, et la source de bénéfice de redistribution d'artiste est donnée à un artiste original qui fait produire la séquence d'acide nucléique artificielle contenue dans l'œuvre vendue.

7. Système permettant de mettre en œuvre le procédé selon l'une quelconque des revendications 1 à 6.
